(19) Europäisches Patentamt
European Patent Office
Office européen des brevets

(11) **EP 2 779 283 A1**

(12) **EUROPEAN PATENT APPLICATION**

(43) Date of publication:
**17.09.2014 Bulletin 2014/38**

(51) Int Cl.:
*H01M 4/131* [(2010.01)]     *H01M 4/485* [(2010.01)]
*H01M 4/505* [(2010.01)]     *H01M 4/525* [(2010.01)]
*H01M 10/04* [(2006.01)]     *H01M 10/0525* [(2010.01)]
*H01M 10/0568* [(2010.01)]   *H01M 10/44* [(2006.01)]

(21) Application number: **14157841.9**

(22) Date of filing: **05.03.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **14.03.2013 JP 2013051747
10.01.2014 JP 2014003436
04.03.2014 JP 2014041402**

(71) Applicant: **Kabushiki Kaisha Toshiba
Tokyo 105-8001 (JP)**

(72) Inventors:
• **Saruwatari, Hidesato
Tokyo, 105-8001 (JP)**
• **Tanaka, Masanori
Tokyo, 105-8001 (JP)**
• **Yamamoto, Dai
Tokyo, 105-8001 (JP)**
• **Kuriyama, Kazuya
Tokyo, 105-8001 (JP)**

(74) Representative: **HOFFMANN EITLE
Patent- und Rechtsanwälte
Arabellastrasse 4
81925 München (DE)**

(54) **Nonaqueous electrolyte battery and battery pack**

(57)     In general, according to one embodiment, there is provided a nonaqueous electrolyte battery. The nonaqueous electrolyte battery includes a positive electrode containing a lithium nickel cobalt manganese composite oxide, and a negative electrode containing a spinel-type lithium titanium composite oxide, and a nonaqueous electrolyte. The nonaqueous electrolyte battery shows improved capacity after an aging step because the capacity difference between the positive and the negative electrode is reduced.

Charge and discharge capacity ($0.88C\gamma + C\delta$)
in nonaqueous electrolyte battery whose charge and discharge balance is adjusted by self-discharge from the negative electrode

$C\gamma$ =Amount of Li which can be absorbed in the negative electrode

$C\alpha$ =($0.88C\gamma$)=Amount of Li which can be absorbed in the positive electrode     $C\delta$

$C\beta$ =($0.97C\gamma$)=Amount of Li which can be released from the negative electrode

**F I G. 3**

EP 2 779 283 A1

**Description**

FIELD

Embodiments described herein relate generally to a nonaqueous electrolyte battery and a battery pack.

BACKGROUND

In a battery which include the combination of a positive electrode and a negative electrode having initial charge-and-discharge efficiencies different from each other, the initial charge capacity is the smaller one of the quantities of electricity each of which can be passed through the positive electrode or the negative electrode, and the initial discharge capacity is the product obtained by multiplying the charge capacity by the smaller one of the initial charge-and-discharge efficiencies of the positive electrode and the negative electrodes. Accordingly, if the initial charge-and-discharge efficiency of the positive electrode is smaller than that of the negative electrode, an undischarged region remains in the negative electrode after initial discharging. Efficient use of the remaining region of the negative electrode enables the energy density to be raised.

BRIEF DESCRIPTION OF THE DRAWING

FIG. 1 shows the relationship among the $C\gamma$, $C\alpha$, and $C\beta$ of the nonaqueous electrolyte battery according to an embodiment;
FIG. 2 shows the relationship among the $C\gamma$ and $C\beta$ of the nonaqueous electrolyte battery according to an embodiment;
FIG. 3 shows the relationship among the $C\gamma$, $C\alpha$, $C\beta$, and $C\delta$ of the nonaqueous electrolyte battery according to an embodiment;
FIG. 4 is an exploded perspective view of the nonaqueous electrolyte battery according to an embodiment;
FIG. 5 is a partially developed perspective view of the electrode group included in the nonaqueous electrolyte battery of FIG. 4;
FIG. 6 is a block diagram showing the electric circuit of the battery pack according to an embodiment; and
FIG. 7 is a schematic view showing the three-pole cell used in the examples.

DETAILED DESCRIPTION

In general, according to one embodiment, there is provided a nonaqueous electrolyte battery. The nonaqueous electrolyte battery according to one embodiment includes a positive electrode, a negative electrode, and a nonaqueous electrolyte. The positive electrode contains $Li_{1-x}Ni_{1-a-bc}Co_aMn_bMl_cO_2$ (wherein M1 is at least one metal selected from the group consisting of Mg, Al, Si, Ti, Zn, Zr, Ca, W, Nb, and Sn, $-0.2 \leq x \leq 0.5$, $0 < a \leq 0.5$, $0 < b \leq 0.5$, and $0 \leq c \leq 0.1$). The negative electrode contains $Li_{4+y}Ti_{5-d}M2_dO_{12}$ (wherein M2 is at least one metal selected from the group consisting of Mg, Al, Si, Ti, Zn, Zr, Ca, W, Nb, and Sn, $-1 \leq y \leq 3.5$, and $0 \leq d \leq 0.1$). The nonaqueous electrolyte battery satisfies the following formula (1):

$$0.92C\beta < C\alpha \leq 1.00C\beta \qquad (1)$$

The $C\alpha$ is a discharge capacity (mAh/g) of the negative electrode. The $C\alpha$ is obtained by discharging the nonaqueous electrolyte battery from a fully charged state to 1.0 V of a voltage of the nonaqueous electrolyte battery at 25°C and at a 1/5 C rate of the rated capacity. The $C\beta$ is a discharge capacity (mAh/g) of the negative electrode. The $C\beta$ is obtained by charging the negative electrode to 1.4 V (vs. Li/Li$^+$) with a constant current at the 1/5 C rate and at 25°C, and subsequently charging the negative electrode at a constant potential for 10 hours, and then discharging the negative electrode to 2.0 V (vs. Li/Li$^+$) with a constant current at the 1/5 C rate.

(FIRST EMBODIMENT)

According to a first embodiment, a nonaqueous electrolyte battery including a positive electrode, a negative electrode, and a nonaqueous electrolyte is provided. The positive electrode contains the lithium nickel cobalt manganese composite oxide expressed by $Li_{1x}Ni_{1-a-b-c}Co_aMn_bM1_cO_2$ (wherein M1 is at least one metal selected from the group consisting of Mg, Al, Si, Ti, Zn, Zr, Ca, W, Nb, and Sn, $-0.2 \leq x\ 0.5$, $0 < a \leq 0.5$, $0 < b \leq 0.5$, and $0 \leq c \leq 0.1$). The negative electrode contains the spinel-type lithium titanium composite oxide expressed by $Li_{4+y}Ti_{5-d}M2_dO_{12}$ (wherein M2 is at least one metal selected from the group consisting of Mg, Al, Si, Ti, Zn, Zr, Ca, W, Nb, and Sn, $-1 \leq y \leq 3.5$, and $0 \leq d \leq 0.1$). The nonaqueous electrolyte battery satisfies the following formula (1):

$$0.92C\beta < C\alpha \leq 1.00C\beta \qquad (1)$$

The $C\alpha$ is a discharge capacity (mAh/g) of the negative electrode. The $C\alpha$ is obtained by discharging the nonaqueous electrolyte battery from a fully charged state to 1.0 V of a voltage of the nonaqueous electrolyte battery at 25°C and at a 1/5 C rate of the rated capacity. The $C\beta$ is a discharge capacity (mAh/g) of the negative electrode. The $C\beta$ is obtained by charging the negative electrode to 1.4 V (vs. Li/Li+) with the constant current at a 1/5 C rate and at 25°C, and subsequently charging the negative electrode at a constant potential for 10 hours, and then discharging the negative electrode to 2.0 V (vs. Li/Li+) with a constant current at the 1/5 C rate.

In the nonaqueous electrolyte battery including a lithium-nickel-cobalt-manganese composite oxide in the positive electrode and a spinel-type lithium-titanium composite oxide in the negative electrode, if the initial charge capacity of the negative electrode is designed to be smaller than the initial charge capacity of the positive electrode, the initial charge capacity of the nonaqueous electrolyte battery is determined by the capacity of the negative electrode, and the initial discharge capacity of the nonaqueous electrolyte battery is obtained by multiplying the initial charge capacity by the initial charge-and-discharge efficiency of the positive electrode. Therefore, in such a nonaqueous electrolyte battery, the unused region of negative electrode capacity remains. The inventors have made the following finding: when the nonaqueous electrolyte battery satisfies the formula (1), the self-discharge amount of the negative electrode can be made higher than the self-discharge amount of the positive electrode after initial charge, and the balance of the charge and discharge curve can be adjusted, whereby the unused region of the negative electrode can be decreased, and the energy density of the battery can be increased.

The initial charge-and-discharge efficiency of a spinel-type lithium titanium composite oxide is usually within a range from 96 to 98%. The initial charge-and-discharge efficiency varies depending on the amount of impurities in the active material, and calcination conditions (e.g., calcination temperature, heating-up period, cooling period, and number of calcination). On the other hand, the initial charge-and-discharge efficiency of the lithium nickel cobalt manganese composite oxide is usually within a range from 87 to 90%. Its initial charge-and-discharge efficiency also varies depending on the amount of impurities in the active material, and calcination conditions (e.g., calcination temperature, heating-up period, cooling period, and number of calcination), just like that of the spinel-type lithium titanium composite oxide. Accordingly, the nonaqueous electrolyte battery satisfies a following formula (3):

$$Ec \leq Ea \qquad (3)$$

wherein Ec is the initial charge-and-discharge efficiency (%) of the positive electrode, and Ea is the initial charge-and-discharge efficiency (%) of the negative electrode.

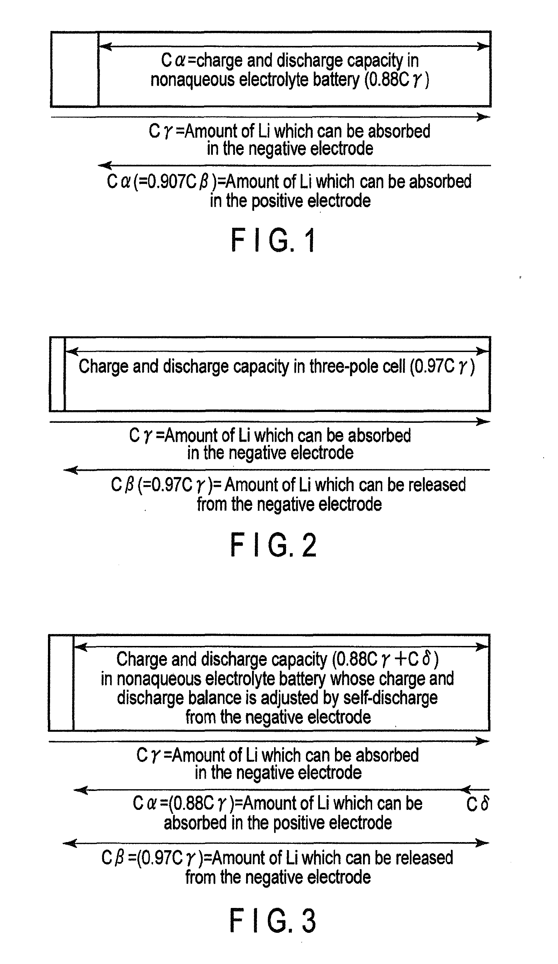

Now, an example is described below with reference to FIG. 1, wherein the initial charge-and-discharge efficiency of the positive electrode is 88%, the initial charge-and-discharge efficiency of the negative electrode is 97%, and the initial charge capacity of the nonaqueous electrolyte battery is $C\gamma$ (mAh/g). The discharge capacity of the nonaqueous electrolyte battery is $0.88C\gamma$, which is obtained by multiplying the initial charge capacity $C\gamma$ (mAh/g) with the initial charge-and-discharge efficiency of the positive electrode (88%). The amount of lithium absorbable into the negative electrode is equal to the initial charge capacity $C\gamma$ (mAh/g). Accordingly, the negative electrode capacity $C\alpha$ discharged within the nonaqueous electrolyte battery is expressed by $0.88C\gamma$. On the other hand, the negative electrode capacity $C\beta$ (mAh/g) which is confirmed using a three-pole cell including the negative electrode taken out from the nonaqueous electrolyte battery is expressed by $0.97C\gamma$ (see FIG. 2). Accordingly, $C\alpha = 0.88 \times (C\beta/0.97) = 0.907C\beta$. This means that 90.7% of the chargeable-and-dischargeable capacity $C\beta$ is discharged within the nonaqueous electrolyte battery, and the $C\alpha$ corresponds to the amount of lithium which can be absorbed in the positive electrode (see FIG. 1). And, this means that 9.3% of the chargeable and dischargeable capacity $C\beta$ remains unused. The unused portion of the capacity $C\beta$ corresponds to $0.09C\gamma$, which is the difference obtained by subtracting the negative electrode capacity $(0.88C\gamma)$ discharged within the nonaqueous electrolyte battery from the negative electrode capacity $(0.97C\gamma)$ confirmed using the three-pole cell. Supposing only the negative electrode of the nonaqueous electrolyte battery is self-discharged by $C\delta$ (mAh/g) $(C\delta \leq 0.09C\gamma)$. As a result of this, in the subsequent charging, the negative electrode is charged by the amount equal to the sum of $0.88C\gamma$ and $C\delta$. Thus, it is found that the chargeable and dischargeable capacity of the negative electrode within the nonaqueous electrolyte battery is $(0.88C\gamma + C\delta)$ (mAh/g) (see FIG. 3), indicating that the chargeable and dischargeable portion of the negative electrode increases by $C\delta$.

If $C\alpha$ is not higher than $0.92C\beta$, the initial charge limits the positive electrode capacity, so that the effect of the embodiment is hardly achieved. In addition, if $C\alpha$ is higher than $1.00C\beta$, the portion of the positive electrode which does not participate in charge and discharge becomes dominant, so that the effect of the embodiment is hardly achieved.

Accordingly, when the formula (1) is satisfied, self-discharge of the negative electrode can be selectively accelerated, so that the charge and discharge curve balance can be adjusted so as to increase the energy density of the nonaqueous electrolyte battery.

$C\alpha$ is preferably within a range from 155 mAh/g to 175 mAh/g. As a result of this, a high energy density is achieved.

A selective progress of self-discharge of the negative electrode is enabled by the inclusion of a B-containing lithium salt into the nonaqueous electrolyte. This mechanism means that it is likely that a B-containing anion causes a reduction reaction on the negative electrode, whereby the release of Li from the negative electrode is accelerated. Preferred examples of the B-containing lithium salt include $LiBF_4$, lithium bisoxalatoborate ($LiB(C_2O_4)_2$ (commonly called LiBOB)), lithium difluoro(oxalato)borate ($LiF_2BC_2O_4$), and lithium difluoro(trifluoro-2-oxide-2-trifluoro-methylpropionate(2-)-0,0)borate ($LiBF_2(OCOOC(CF_3)_2)$ (commonly called $LiBF_2$ (HHIB))).

In order to further selectively progress self-discharge of the negative electrode, the amount of $CO_2$ contained in negative electrode as measured by the pyrolysis gas chromatography mass spectrometry (GC-MS) at 500°C is preferably within a range from 0.05 to 1.5 mL/g. This mechanism means that it is likely that the $CO_2$ species adsorbed to the negative electrode is reduced to CO on the negative electrode, whereby the release of Li from the negative electrode is accelerated.

In order to accelerate the self-discharge reaction of the negative electrode, the battery is preferably stored at a state of charge (SOC) of 5 to 50% and at a temperature of 45 to 85°C. If the SOC is less than 5%, the self-discharge amount is insufficient, so that the intended charge and discharge curve balance may not be achieved. On the other hand, if the SOC is more than 50%, the resistance may markedly increase due to the side reaction caused during acceleration of self-discharge. In addition, if the environmental temperature is lower than 45°C, the self-discharge amount is insufficient, so that the intended charge and discharge curve balance may not be achieved. On the other hand, if the environmental temperature is higher than 85°C, the resistance may be markedly increased by the side reaction caused during acceleration of self-discharge.

100 % of the state of charge (SOC) is the charge capacity of the nonaqueous electrolyte battery, wherein the charge capacity is measured by charging with a constant current/a constant voltage (CC/CV), that is to say, charging the nonaqueous electrolyte battery to 2.8 V with a constant current at a 1 C rate, and then charging the nonaqueous electrolyte battery with a constant voltage at 2.8 V until the current becomes 0.05 C.

The nonaqueous electrolyte battery preferably satisfies the following formula (2):

$$0.95Ca \leq Cc \leq 1.2Ca \quad (2)$$

wherein Cc is the discharge capacity (Ah/$m^2$) of the positive electrode per unit area, and Ca is the discharge capacity (Ah/$m^2$) of the negative electrode per unit area.

The area of the positive electrode is the total area of the positive electrode material layer, and the area of the negative electrode is the total area of the negative electrode material layer. The discharge capacity of the positive electrode is the initial discharge capacity of the positive electrode, and the discharge capacity of the negative electrode is the initial discharge capacity of the negative electrode.

When the battery satisfies the formula (2), the battery capacity is improved, so that a high energy density is achieved.

The nonaqueous electrolyte battery according to this embodiment is described in detail below for each member.

1) Negative electrode

The negative electrode includes a current collector, and a negative electrode material layer (negative electrode active material-containing layer) which is supported on one side or both sides of the current collector, and contains a negative electrode active material, a conductive agent, and a binder. The negative electrode is prepared by, for example, mixing a powdery negative electrode active material with a conductive agent and a binder, suspending the mixture in an appropriate solvent, applying the suspension (slurry) to the current collector, followed by drying, and pressing to form a strip electrode.

The current collector is made of metal foil or alloy foil, particularly preferably aluminum foil or aluminum alloy foil. The aluminum foil or aluminum alloy foil preferably has an average crystal grain diameter of 50 $\mu$m or less, more

preferably 30 $\mu$m or less, and even more preferably 5 $\mu$m or less. When the average crystal grain diameter of the aluminum foil or aluminum alloy foil is 50 $\mu$m or less, the aluminum foil or aluminum alloy foil can have a markedly high strength. This allows to densify the negative electrode material layer under a high pressing pressure, thereby increasing the negative electrode capacity. In addition, dissolution and corrosion deterioration of the current collector in an over-discharge cycle in a high temperature environment (40°C or higher) can be prevented. Therefore, an increase in the negative electrode impedance can be suppressed. Furthermore, the output performance, the quick charge, and the charge-and-discharge cycle performance can be improved.

The average crystal grain diameter can be determined as follows. The tissue of the current collector surface is observed by an optical microscope, and the number (n) of crystal grains present in an area of 1 mm $\times$ 1 mm is determined. Using the number n, the average crystal grain area S is calculated from the formula: $S = 1 \times 10^6/n$ ($\mu$m$^2$). From the value of S thus obtained, the average grain diameter d ($\mu$m) is calculated using the following formula (A).

$$d = 2 \ (S/\pi)^{1/2} \quad (A)$$

The average crystal grain diameter of the aluminum foil or aluminum alloy foil varies due to the complex influence of plural factors such as the material tissue, the impurities, the processing conditions, the heat-treatment history, and the annealing conditions. The crystal grain diameter can be adjusted by appropriately combining these factors in the manufacturing process of the current collector.

The thickness of the current collector is preferably 20 $\mu$m or less, and more preferably 15 $\mu$m or less. The purity of the aluminum foil is preferably 99% by mass or more. The aluminum alloy preferably contains an element such as magnesium, zinc, or silicon. The content of the transition metal such as iron, copper, nickel, or chromium, contained as an alloy component, is preferably 1% by mass or less.

The negative electrode active material contains the spinel-type lithium titanium composite oxide expressed by $Li_{4+y}Ti_{5-d}M2_dO_{12}$. The negative electrode active material may be a spinel-type lithium titanium composite oxide alone, or a mixture of a spinel-type lithium titanium composite oxide and other active material. Examples of other active materials include titanium-containing oxides and metal compounds. Examples of titanium-containing oxides include ramsdellite-type lithium titanium composite oxide $Li_{2+x}Ti_3O_7$ (wherein x is changed by the charge and discharge reaction in the range of $-1 \leq x \leq 3$), and metal composite oxides containing Ti and at least one element selected from the group consisting of P, V, Sn, Cu, Ni, and Fe. Examples of the metal composite oxide containing Ti and at least one element selected from the group consisting of P, V, Sn, Cu, Ni, and Fe include $TiO_2$-$P_2O_5$, $TiO_2$-$V_2O_5$, $TiO_2$-$P_2O_5$-$SnO_2$, and $TiO_2$-$P_2O_5$-MeO (wherein Me is at least one element selected from the group consisting of Cu, Ni, and Fe). The metal composite oxide preferably has low crystallinity, and has a microstructure wherein crystal and amorphous phases coexist, or only an amorphous phase exists. The metal composite oxide having this microstructure markedly can improve the cycle performance. These metal composite oxides turn to lithium titanium composite oxides upon absorption of lithium during charging. The metal compound may be a metal sulfide or metal nitride. Examples of the metal sulfide include titanium sulfide such as $TiS_2$, molybdenum sulfide such as $MoS_2$, and iron sulfide such as $FeS$, $FeS_2$, and $Li_xFeS_2$. Examples of the metal nitride include lithium cobalt nitride (e.g., $Li_sCo_tN$, $0 < s < 4$, $0 < t < 0.5$).

One or more of the negative electrode active material may be used herein.

Examples of the binder include polytetrafluoroethylene (PTFE), polyvinylidene fluoride (PVdF), polyacrylic acid, fluorine-based rubber, and styrene-butadiene rubber.

Examples of the conductive agent include carbon black, graphite, graphene, fullerenes, and coke. Among them, carbon black and graphite are preferred. Examples of carbon black include acetylene black, ketjen black, and furnace black.

The proportions of the negative electrode active material, conductive agent, and binder in the negative electrode material layer are preferably from 73 to 96% by weight, from 2 to 20% by weight, and from 2 to 7% by weight, respectively.

2) Positive electrode

The positive electrode includes a positive electrode current collector and a positive electrode material layer (positive electrode active material-containing layer) which is supported on one side or both sides of the current collector, and contains an active material, a conductive agent, and a binder.

The positive electrode is prepared by, for example, mixing a positive electrode active material with a conductive agent and a binder, suspending the mixture in an appropriate solvent, applying the suspension to the current collector such as aluminum foil, followed by drying, and pressing to form a strip electrode.

The positive electrode active material contains the lithium nickel cobalt manganese composite oxide expressed by $Li_{1-x}Ni_{1-a-b-c}CO_aMn_bM1_cO_2$. The positive electrode active material may be composed of a lithium nickel cobalt manganese composite oxide alone, or a mixture of a lithium nickel cobalt manganese composite oxide and other active material. Examples of other positive electrode active materials include various oxides and sulfides. Examples thereof include manganese dioxide ($MnO_2$), iron oxide, copper oxide, nickel oxide, lithium manganese composite oxide (e.g., $Li_xMn_2O_4$ or $LixMnO_2$), lithium nickel composite oxide (e.g., $Li_xNiO_2$), lithium cobalt composite oxide ($Li_xCoO_2$), lithium nickel cobalt composite oxide {e.g., $Li_xNi_{1-y-z}Co_yM_zO_2$ (wherein M is at least one element selected from the group consisting of Al, Cr, and Fe), $0 \leq y \leq 0.5$, and $0 \leq z \leq 0.1$}, lithium manganese cobalt composite oxide {e.g., $Li_xmn_{1-y-z}Co_yM_zO_2$ (wherein M is at least one element selected from the group consisting of Al, Cr, and Fe), $0 \leq y \leq 0.5$, and $0 \leq z \leq 0.1$}, lithium manganese nickel. composite oxide (e.g., $LixMn_{1/2}Ni_{1/2}O_2$), spinel-type lithium manganese nickel composite oxide (e.g., $LixMn_{2-y}Ni_yO_4$), lithium phosphate having a olivine structure (e.g., $LixFePO_4$, $Li_xFe_{1-y}Mn_yPO_4$, and $LixCoPO_4$), iron sulfate (e.g., $Fe_2(SO_4)_3$), and vanadium oxide (e.g., $V_2O_5$). Other examples include organic and inorganic materials such as conductive polymer materials such as polyaniline and polypyrrole, disulfide polymer-based materials, sulfur (S), and carbon fluoride. The x, y, and z, whose preferred ranges are not described above, are preferably from 0 to 1.

One or more of the positive electrode active materials may be used herein.

Examples of the conductive agent include carbon black, graphite, graphene, fullerenes, and coke. Among them, carbon black and graphite are preferred. Examples of carbon black include acetylene black, ketjen black, and furnace black.

Examples of the binder include polytetrafluoroethylene (PTFE), polyvinylidene fluoride (PVdF), polyacrylic acid, and fluorine-based rubber.

The proportions of the positive electrode active material, conductive agent, and binder in the positive electrode material layer are preferably from 80 to 95% by weight, from 3 to 20% by weight, and from 2 to 7% by weight, respectively.

The positive electrode current collector is preferably made of aluminum foil or aluminum alloy foil. The average crystal grain diameter of the aluminum foil and aluminum alloy foil is preferably 50 $\mu$m or less, more preferably. 30 $\mu$m or less, and even more preferably 5 $\mu$m or less. When the average crystal grain diameter is 50 $\mu$m or less, the aluminum foil or aluminum alloy foil can have a markedly high strength, which allows to densify the positive electrode under a high pressing pressure, thereby increasing the battery capacity.

The thickness of the current collector is 20 $\mu$m or less, and more preferably 15 $\mu$m or less. The purity of the aluminum foil is preferably 99% by mass or more. The aluminum alloy preferably contains an element such as magnesium, zinc, or silicon. On the other hand, the content of a transition metal such as iron, copper, nickel, or chromium is preferably 1% by mass or less.


3) Nonaqueous electrolyte


The nonaqueous electrolyte contains a nonaqueous solvent and an electrolyte salt dissolved in the nonaqueous solvent. The nonaqueous solvent may contain a polymer. It is preferred that a B-containing lithium salt be contained as an electrolyte salt.

Preferred examples of the B-containing lithium salt include $LiBF_4$, lithium bisoxalatoborate ($LiB(C_2O_4)_2$ (commonly called LiBOB)), lithium difluoro(oxalato)borate ($LiF_2BC_2O_4$), and lithium difluoro(trifluoro-2-oxide-2-trifluoro-methylpropionate(2-)-0,0)borate ($LiBF_2(OCOOC(CF_3)_2)$ (commonly called $LiBF_2$ (HHIB))).

The electrolyte salt may be composed of a B-containing lithium salt alone, or a mixture of a B-containing lithium salt and a B-free lithium salt. Examples of the B-free lithium salt include $LiPF_6$, $Li(CF_3SO_2)_2N$ (lithium bistrifluoromethanesulfonylamide; commonly called LiTFSI), $LiCF_3SO_3$ (commonly called LiTFS), $Li(C_2F_5SO_2)_2N$ (lithium bispentafluoroethanesulfonylamide; commonly called LiBETI), $LiClO_4$, $LiAsF_6$, and $LiSbF_6$.

One or more of the electrolyte salts may be used herein.

The concentration of the electrolyte salt is preferably within a range from 1.0 M to 3.0 M. As a result of this, the performance under a high load current can be improved.

The concentration of the B-containing lithium salt is preferably from 0.01 M to 0.75 M. As a result of this, the effect of the acceleration of the self-discharge of the negative electrode can be sufficiently secured.

The nonaqueous solvent is not particularly limited, and examples thereof include propylene carbonate (PC), ethylene carbonate (EC), 1,2-dimethoxyethane (DME), $\gamma$-butyrolactone (GBL), tetrahydrofuran (THF), 2-methyltetrahydrofuran (2-MeHF), 1,3-dioxolane, sulfolane, acetonitrile (AN), diethyl carbonate (DEC), dimethyl carbonate (DMC), methylethyl carbonate (MEC), and dipropyl carbonate (DPC). One of these solvent may be used alone, or a mixture of two or more of them may be used. When two or more solvents are combined, all the solvents preferably have a dielectric constant of 20 or more.

The nonaqueous electrolyte may contain an additive. The additive is not particularly limited, and examples thereof include vinylene carbonate (VC), fluorovinylene carbonate, methylvinylene carbonate, fluoromethylvinylene carbonate, ethylvinylene carbonate, propylvinylene carbonate, butylvinylene carbonate, dimethylvinylene carbonate, diethylvinylene carbonate, dipropylvinylene carbonate, vinylene acetate (VA), vinylene butylate, vinylene hexanate, vinylene crotonate, catechol carbonate, propane sultone, and butane sultone. One or more of the additives may be used herein.

4) Separator

The separator is not particularly limited as long as it is insulative, and may be a porous film or nonwoven fabric made of a polymer such as polyolefin, cellulose, polyethylene terephthalate, or vinylon. The porous film or nonwoven fabric may contain inorganic particles. The separator may be made of one material, or a combination of two or more materials.

5) Exterior member

The exterior member may be formed from a laminate film having a thickness of 0.5 mm or less, or be a metal container having a thickness of 3 mm or less. The thickness of the metal container is more preferably 0.5 mm or less. Alternatively, a resin container made of a polyolefin resin, a polyvinyl chloride resin, a polystyrene resin, an acrylic resin, a phenolic resin, a polyphenylene resin, or a fluorocarbon resin may be used.

Examples of the shape of the exterior member, more specifically examples of the shape of the battery include flat (thin), square, cylinder, coin, and button. The battery may be a compact battery mounted on mobile electronic devices, or a large battery mounted on two- to four-wheel automobiles.

The laminate film used herein is a multilayer film composed of a metal layer sandwiched between resin films. The metal layer is preferably aluminum foil or aluminum alloy foil, thereby reducing the weight. The resin film may be made of, for example, a polymer material such as polypropylene (PP), polyethylene (PE), nylon, or polyethylene terephthalate (PET). The laminate film may be heat-sealed to be formed into the shape of the exterior member.

The metal container may be made of, for example, aluminum or aluminum alloy. The aluminum alloy preferably contains an element such as magnesium, zinc, or silicon. When the alloy contains a transition metal such as iron, copper, nickel, or chromium, its content is preferably 100 ppm or less.

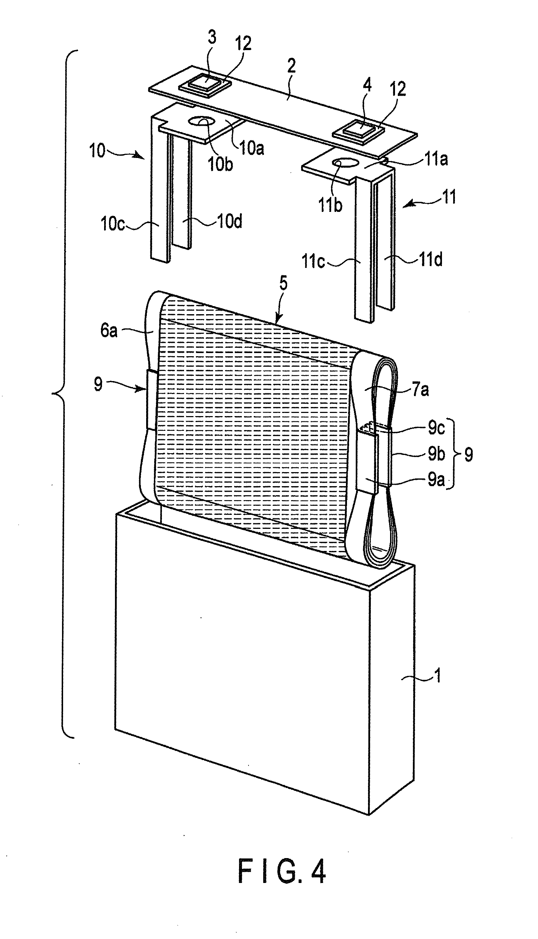

FIG. 4 shows an example of the nonaqueous electrolyte battery according to this embodiment. The battery is a hermetically-sealed square nonaqueous electrolyte battery. The nonaqueous electrolyte battery includes an exterior can 1, a lid 2, a positive electrode external terminal 3, a negative electrode external terminal 4, and an electrode group 5. An exterior member is composed of the exterior can 1 and the lid 2.

The exterior can 1 has a bottomed square cylindrical shape, and is formed from, for example, a metal such as aluminum, aluminum alloy, iron, or stainless steel.

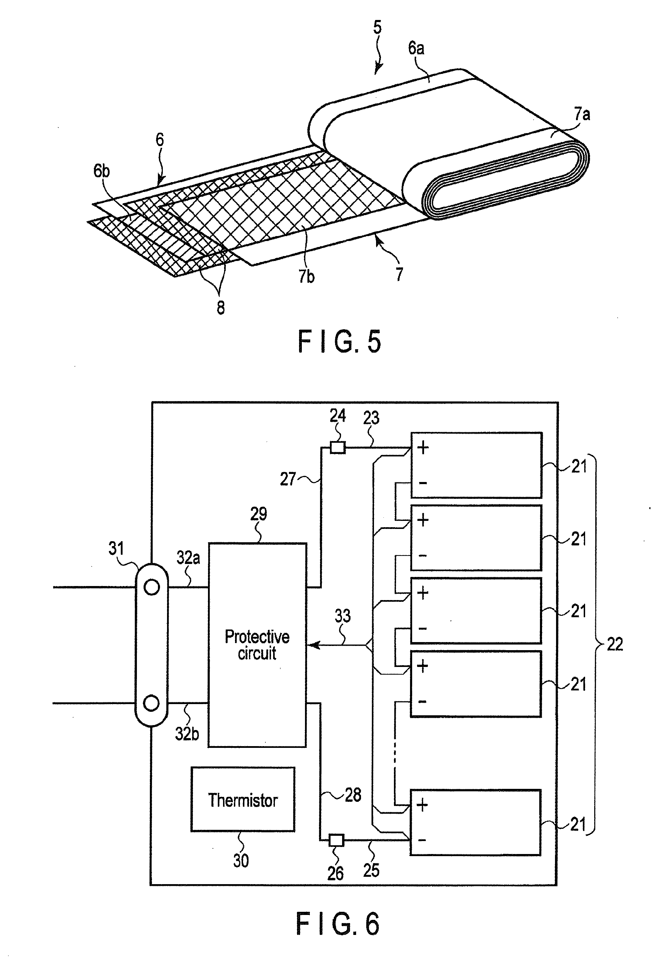

As shown in FIG. 5, the flatten electrode group 5 is formed by coiling a positive electrode 6 and a negative electrode 7 with a separator 8 sandwiched therebetween into a flatten shape. The positive electrode 6 includes, for example, a positive electrode current collector in a strip form made of metal foil, a positive electrode current collecting tab 6a made of one edge of the positive electrode current collector in parallel with the long side of the current collector, and a positive electrode material layer (positive electrode active material-containing layer) 6b formed on the positive electrode current collector excluding at least the part of the positive electrode current collecting tab 6a. On the other hand, the negative electrode 7 includes a negative electrode current collector in a strip form made of, for example, metal foil, a negative electrode current collecting tab 7a made of one edge of the negative electrode current collector in parallel with the long side of the current collector, and a negative electrode material layer (negative electrode active material-containing layer) 7b formed on the negative electrode current collector excluding at least the part of the negative electrode current collecting tab 7a.

The positive electrode 6, the separator 8, and the negative electrode 7 are coiled in such a manner that the positions of the positive electrode 6 and the negative electrode 7 are displaced from each other, such that the positive electrode current collecting tab 6a protrudes from the separator 8 in the direction of the coiling axis of the electrode group, and the negative electrode current collecting tab 7a protrudes from the separator 8 in the opposite direction. As a result of this coiling, in the electrode group 5, as shown in FIG. 5, the positive electrode current collecting tab 6a in a spiral form protrudes from one end surface, and the negative electrode current collecting tab 7a in a spiral form protrudes from the other end surface. The electrode group 5 is impregnated with an electrolytic solution (not shown).

As shown in FIG. 4, each of the positive electrode current collecting tab 6a and negative electrode current collecting tab 7a is divided into two bundles at the center of coiling of the electrode group 5. A conductive holding member 9 includes first and second holding parts 9a and 9b which are in a generally U-shaped form, and a connecting part 9c which electrically connects the first holding part 9a and second holding part 9b. Each of the positive and negative electrode current collecting tabs 6a and 7a is held by the first holding part 9a at one bundle, and by the second holding part 9b at the other bundle.

A positive electrode lead 10 includes a supporting plate 10a which is in a generally rectangular form, a through hole 10b opened in the supporting plate 10a, and current collecting parts 10c and 10d in a strip form, which bifurcate from the supporting plate 10a and extend downwards. On the other hand, a negative electrode lead 11 includes a supporting plate 11a which is in a generally rectangular form, a through hole 11b opened in the supporting plate 11a, and current collecting parts 11c and 11d which bifurcate from the supporting plate 11a and extend downwards.

The positive electrode lead 10 sandwiches the holding member 9 between the current collecting parts 10c and 10d. The current collecting part 10c is placed at the first holding part 9a of the holding member 9. The current collecting part 10d is placed at the second holding part 9b. The current collecting parts 10c and 10d, the first and second holding parts 9a and 9b, and the positive electrode current collecting tab 6a are bonded together by, for example, ultrasonic welding. As a result of this, the positive electrode 6 of the electrode group 5 and the positive electrode lead 10 are electrically connected through the positive electrode current collecting tab 6a.

The negative electrode lead 11 sandwiches the holding member 9 between the current collecting parts 11c and 11d. The current collecting part 11c is placed at the first holding part 9a of the holding member 9. On the other hand, the current collecting part 11d is placed at the second holding part 9b. The current collecting parts 11c and 11d, the first and second holding parts 9a and 9b, and the negative electrode current collecting tab 7a are bonded together by, for example, ultrasonic welding. As a result of this, the negative electrode 7 of the electrode group 5 and the negative electrode lead 11 are electrically connected through the negative electrode current collecting tab 7a.

The materials of the positive and negative electrode leads 10 and 11, and the holding member 9 are not particularly limited, but are preferably the same as the material of the positive and negative electrode external terminals 3 and 4. The positive electrode external terminal 3 is made of, for example, aluminum or aluminum alloy, and the negative electrode external terminal 4 is made of, for example, aluminum, an aluminum alloy, copper, nickel, or nickel-plated iron. For example, when the material of the external terminal is aluminum or an aluminum alloy, the material of the lead is preferably aluminum or an aluminum alloy. When the external terminal is made of copper, the material of the lead is preferably, for example, copper.

The lid 2, which is a rectangular plate, is seam-welded to the opening of the exterior can 1 using, for example, a laser. The lid 2 is formed from, for example, a metal such as aluminum, an aluminum alloy, iron, or stainless steel. The lid 2 and the exterior can 1 are preferably formed from the same type of metal. The positive electrode external terminal 3 is electrically connected to the supporting plate 10a of the positive electrode lead 10, and the negative electrode external terminal 4 is electrically connected to the supporting plate 11a of the negative electrode lead 11. The electrical insulation gasket 12 is placed between the positive and negative electrode external terminals 3 and 4 and the lid 2, and electrically insulates the positive and negative electrode external terminals 3 and 4 from the lid 2. The electrical insulation gasket 12 is preferably a resin-molded article.

The nonaqueous electrolyte battery according to the first embodiment described above includes a positive electrode containing a lithium nickel cobalt manganese composite oxide, and a negative electrode containing a spinel-type lithium titanium composite oxide, and satisfies the formula (1) ($0.92C\beta < C\alpha \leq 1.00C\beta$), so that it can have an improved battery capacity and an improved energy density.

(SECOND EMBODIMENT)

According to the second embodiment, a battery pack including a nonaqueous electrolyte battery is provided. The nonaqueous electrolyte battery is the nonaqueous electrolyte battery according to the first embodiment. The number of the nonaqueous electrolyte batteries (unit cells) included in the battery pack may be one or more. When the battery pack includes plural unit cells, these unit cells are electrically connected to each other in series or parallel.

The battery pack is described in detail with reference to FIG. 6. Plural unit cells 21 are electrically connected to each other in series to form a battery module 22. A positive electrode-side lead 23 is connected to the positive terminal of the battery module 22, and the tip is inserted into and electrically connected to the positive electrode-side connector 24. The negative electrode-side lead 25 is connected to the negative terminal of the battery module 22, and the tip is inserted into and electrically connected to the negative electrode-side connector 26. These connectors 24 and 26 are connected to a protective circuit 29 through wiring 27 and 28.

A thermistor 30 detects the temperature of the unit cell 21, and the detection signal is transmitted to the protective circuit 29. The protective circuit 29 blocks positive-side wiring 32a and negative-side wiring 32b between the protective circuit 29 and a current-carrying terminal 31 connected to the external device under predetermined conditions. The predetermined conditions include a case when, for example, the temperature detected by the thermistor 30 reaches the predetermined temperature or higher. The predetermined conditions also include a case when the over-charge, over-discharge, or over-current of the unit cell 21 is detected. The detection of the over-charge and so on is carried out for individual or all unit cells 21. When each of the unit cells 21 is detected, the battery voltage may be detected, or the potential of the positive or negative electrode may be detected. In the latter case, a lithium electrode as a reference electrode is inserted into each of the unit cells 21. In the case shown in FIG. 6, wiring 33 for voltage detection is connected to each of the unit cells 21, and detection signals are transmitted to the protective circuit 29 through the wiring 33.

In FIG. 6, the unit cells 21 are connected in series. Alternatively, they may be connected in parallel, thereby increasing the battery capacity. The assembled battery pack may be connected in series or parallel.

The embodiment of the battery pack may be appropriately changed according to the intended use. The battery pack is preferably used in applications where cycling characteristics under a large current are expected. Specifically, the battery pack is suitable as a power source for digital cameras or an on-vehicle battery for two- to four-sheet hybrid electric vehicles, two- to four-wheel electric vehicles, and electrically assisted pedal cycles. In particular, the battery pack is suitable as an on-vehicle battery.

The battery pack according to the second embodiment described above includes the battery according to the first embodiment. Therefore, a battery pack having a high capacity and a high energy density can be provided.

EXAMPLES

The examples are described below with reference to drawings.

(Example 1)

<Fabrication of Positive Electrode>

$LiNi_{0.5}Co_{0.2}Mn_{0.3}O_2$ (initial charge capacity: 190 mAh/g, initial discharge capacity (0.88 of the initial charge capacity): 167 mAh/g, initial charge-and-discharge efficiency Ec: 88%, charge and discharge potential range: 3.0 to 4.3 V (vs. Li/Li$^+$)) as the positive electrode active material was mixed with graphite as the conductive agent in a proportion of 2.5% by weight with respect to the total weight of the positive electrode, acetylene black in a proportion of 2.5% by weight with respect to the total weight of the positive electrode, and PVdF as the binder in a proportion of 5% by weight with respect to the total weight of the positive electrode, and the mixture was dispersed in a n-methylpyrrolidone (NMP) solvent to prepare a slurry. The slurry thus obtained was applied to aluminum foil having a thickness of 15 $\mu$m at a coating weight of 150 g/m$^2$ per unit area, followed by drying and pressing to fabricate a positive electrode having an electrode density of 3.0 g/cm$^3$ and an electrode material layer area of 0.25 m$^2$. The discharge capacity Cc of the positive electrode is 22.55 Ah/m$^2$ per unit area.

<Fabrication of negative electrode>

$Li_4Ti_5O_{12}$ (initial charge capacity: 170 mAh/g, initial discharge capacity (0.96 of the initial charge capacity): 163 mAh/g, initial charge and discharge efficiency Ea: 96%, charge and discharge potential range: 1.4 to 2.0 V (vs. Li/Li$^+$)) as the negative electrode active material was mixed with graphite as the conductive agent in a proportion of 5% by weight with respect to the total weight of the negative electrode, PVdF as the binder in a proportion of 5% by weight with respect to the total weight of the negative electrode, and the mixture was blended in an N-methylpyrrolidone (NMP) solution to prepare a slurry. The slurry thus obtained was applied to a current collector made of aluminum foil having a thickness of 15 $\mu$m at a coating weight of 130 g/m$^2$ per unit area, followed by drying and pressing to make a negative electrode material layer on the current collector, and thus fabricating a negative electrode in a strip form having an electrode density of 2.1 g/cm$^3$ and an electrode material layer area of 0.25 m$^2$. The discharge capacity Ca of the negative electrode is 19.07 Ah/m$^2$ per unit area. The amount of $CO_2$ contained in the negative electrode thus obtained was 0.8 mL/g as measured by pyrolysis GC-MS (500°C).

<Preparation of nonaqueous electrolyte>

A nonaqueous solvent which is composed of 33% by volume of PC and 67% by volume of MEC and has a volume ratio PC : MEC of 1 : 2 was mixed with 1.5 M of $LiPF_6$ and 0.2 M of $LiBF_4$, and thus preparing a nonaqueous electrolyte.

<Assembly of battery>

The nonaqueous electrolyte was impregnated into a separator having a thickness of 20 $\mu$m and made of cellulose nonwoven fabric, and then the positive electrode was covered with the separator, the negative electrode was overlaid on the positive electrode with the separator sandwiched therebetween, and the laminate thus obtained was spiraled, thus completing an electrode group having a spiral shape. The electrode group was pressed into a flat shape. The flat electrode group was inserted into a can container made of aluminum having a thickness of 0.3 mm, thus completing a flat nonaqueous electrolyte battery which has the structure shown in FIG. 4, a thickness of 5 mm, a width 30 mm, a height of 25 mm, and a weight of 100 g.

<Aging of battery>

The nonaqueous electrolyte battery thus obtained was subjected to aging by storing in the state of SOC 40% at 50°C for 120 hours.

<Charge and discharge of battery>

The nonaqueous electrolyte battery thus obtained was charged with a constant charging-current at 1 Ah until the battery voltage reached 2.8 V, and then subjected to constant-voltage charging until the charging current reached 0.1 Ah. Thereafter, the battery was discharged at a discharge current of 1 Ah until the battery voltage reached 1.5 V. The battery capacity at that time was 4.71 Ah.

(Example 2)

A battery was made in the same manner as in Example 1, except that the nonaqueous electrolyte was made by mixing a nonaqueous solvent composed of 33% by volume of PC and 67% by volume of MEC, and having a volume ratio PC : MEC of 1 : 2 with 1.5 M of $LiPF_6$, 0.1 M of $LiBF_4$, and 0.1 M of $LiBF_2C_2O_4$. The capacity of the battery was 4.65 Ah.

(Example 3)

A battery was made in the same manner as in Example 1, except that a nonaqueous solvent composed of 33% by volume of PC and 67% by volume of MEC and having a volume ratio PC : MEC of 1 : 2 was mixed with 1.5 M of $LiPF_6$, 0.1 M of $LiBF_4$, and 0.1 M of $LiB(C_2O_4)_2$, thus completing a nonaqueous electrolyte. The capacity of the battery was 4.68 Ah.

(Example 4)

A battery was made in the same manner as in Example 1, except that a nonaqueous solvent composed of 33% by volume of PC and 67% by volume of MEC and having a volume ratio PC : MEC of 1 : 2 was mixed with 1.5 M of $LiPF_6$, 0.1 M of $LiBF_4$, and 0.1 M of $LiBF_2(OCOOC(CF_3)_2)$, thus completing a nonaqueous electrolyte. The capacity of the battery was 4.67 Ah.

(Example 5)

The negative electrode was vacuum dried at 200°C for 24 hours. The amount of the $CO_2$ contained in the negative electrode was 0.02 mL/g as measured by pyrolysis GC-MS (500°C). A battery was made in the same manner as in Example 1, except that the negative electrode thus obtained was used. The capacity of the battery was 4.59 Ah.

(Example 6)

A battery was made in the same manner as in Example 1, except that the nonaqueous electrolyte was a solution prepared by mixing a nonaqueous solvent composed of 33% by volume of PC and 67% by volume of MEC and having a volume ratio PC : MEC of 1 : 2 with 1.5 M of $LiPF_6$, and an aging treatment was carried out by storing at SOC 40% and 75°C for 240 hours. The capacity of the battery was 4.53 Ah.

(Comparative Example 1)

A battery was made in the same manner as in Example 1, except that the nonaqueous electrolyte was a solution prepared by mixing a nonaqueous solvent composed of 33% by volume of PC and 67% by volume of MEC and having a volume ratio PC : MEC of 1 : 2 with 1.5 M of $LiPF_6$, and no aging treatment was carried out. The capacity of the battery was 4.18 Ah.

For the nonaqueous electrolyte batteries of the Examples and Comparative Example, the discharge capacity were measured by discharging each of the nonaqueous electrolyte batteries at 25°C and at a 1/5 C rate of the rated capacity (in this case, 0.84 A) from the fully charged state to the battery voltage of 1.0 V. The discharge capacity thus obtained was multiplied by the initial charge-and-discharge efficiency of the positive electrode Ec (0.88), and the product is shown in Table 2 as the discharge capacity $C\alpha$ (mAh/g) of the negative electrode.

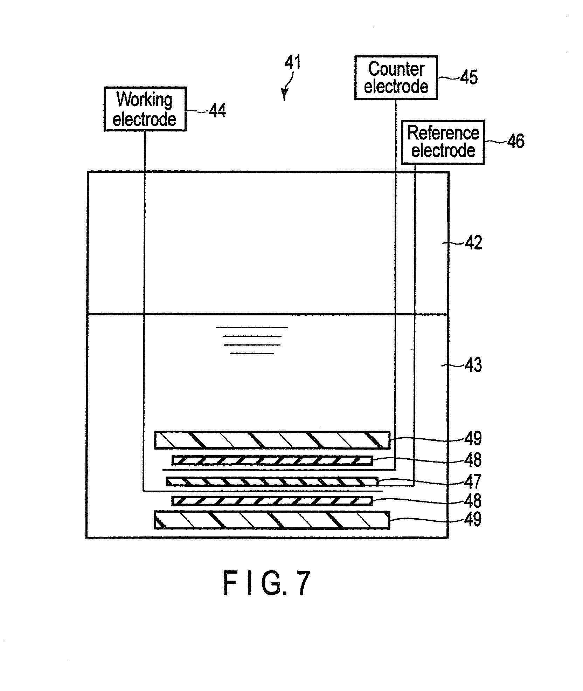

Each of the nonaqueous electrolyte batteries of Examples and Comparative Example was cut in a glove box filled with an inert atmosphere at the welded portion between the exterior can 1 and lid 2 by mechanical polishing (e.g.,

using a file), and the electrode group 5 was taken out from the exterior can 1. Further the positive electrode lead 10 and negative electrode lead 11 were cut, and the holding member 9 was cut out, thereby dividing the electrode group into the positive electrode 6, negative electrode 7, and separator 8. An arbitrary area of the negative electrode was cut into a piece of $2 \times 2$ cm. The piece was washed with methylethyl carbonate, dried, and used as a working electrode. Using the working electrode as well as the counter electrode and reference electrode made of metal lithium, a three-pole cell shown in FIG. 7 was made. The cell was charged to 1.4 V (vs. Li/Li$^+$) with a constant current at 1/5 C rate and at 25°C, and then charged at a constant potential for 10 hours, and further discharged to 2.0 V (vs. Li/Li$^+$) with a constant current at a 1/5 C rate. The discharge capacity C$\beta$ (mAh/g) at the last discharge was measured, and the result is shown in Table 2.

As shown in FIG. 7, the three-pole cell 41 includes a case 42, an electrolytic solution 43 contained in the case 42, a working electrode 44, a counter electrode 45, and a reference electrode 46. The working electrode 44, counter electrode 45, and reference electrode 46 are immersed in the electrolytic solution 43. A separator 47 made of cellulose is placed between the working electrode 44 and counter electrode 45. The reference electrode 46 is inserted between the working electrode 44 and separator 47. The counter electrode 45, separator 47, reference electrode 46, and working electrode 44 are sandwiched between two glass filters 48, and polypropylene plates 49 are placed outside of the two glass filters 48. The laminate composed of the glass filter 48, counter electrode 45, separator 47, reference electrode 46, working electrode 44, and glass filter 48 is pressurized by two polypropylene plates 49.

The amount of $CO_2$ contained in the negative electrode was measured as described below by pyrolysis gas chromatography mass spectrometry (GC-MS) at 500°C. In a glove box filled with an inert atmosphere, several milligrams of the negative electrode material layer containing the active material, conductive agent, and binder are scraped off from the current collector using a spatula or the like. Thereafter, the negative electrode material layer which has been scraped into a measuring vessel is introduced into the apparatus with the inert atmosphere maintained, and subjected to measurement. The amount of carbon dioxide generated when the electrode is kept at 500°C for 1 minute is determined. Subsequently, a gas having a known carbon dioxide concentration is measured in the same manner, and the amount of carbon dioxide is calculated from the comparison with the calibration curve. The inert atmosphere must be maintained so as to prevent adsorption of carbon dioxide and moisture before beginning the sample measurement.

The initial charge-and-discharge efficiencies of the positive and negative electrodes were measured using the three-pole cell shown in FIG. 7. A three-pole cell was made using the positive electrode as the working electrode, charged to 4.3 V (vs. Li/Li$^+$) with a constant current at 0.2 C rate and at 25°C, and then charged at a constant potential of 4.3 V (vs. Li/Li$^+$) until the charge period reaches 10 hours. The charge capacity thus obtained was recorded as the initial charge capacity of the positive electrode. After standing for 1 hour in an open circuit, the cell was discharged to 3.0 V (vs. Li/Li$^+$) with a constant current at a 0.2 C, and the discharge capacity thus obtained was recorded as the initial discharge capacity of the positive electrode. The initial discharge capacity was divided by the initial charge capacity to calculate the initial charge-and-discharge efficiency. Also for the negative electrode, a three-pole cell using the negative electrode as the working electrode was made, the cell was charged and discharged in the same manner at the charge potential of 1.4 V (vs. Li/Li$^+$) and the discharge potential of 2.0 V (vs. Li/Li$^+$), the initial charge-and-discharge capacity was measured, and the initial charge-and-discharge efficiency was calculated.

Table 1

| | | Composition of Electrolyte Solution | Condition of Aging |
|---|---|---|---|
| | Example 1 | $1.5M\text{-}LiPF_6 + 0.2M\text{-}LiBF_4/PC{:}MEC(1{:}2)$ | SOC40%, 50°C, 120h |
| | Example 2 | $1.5M\text{-}LiPF_6 + 0.1M\text{-}LiBF_4 + 0.1M\text{-}LiBF_2C_2O_4/PC{:}MEC(1{:}2)$ | SOC40%, 50°C, 120h |
| | Example 3 | $1.5M\text{-}LiPF_6 + 0.1M\text{-}LiBF_4 + 0.1M\text{-}LiB(C_2O_4)_2/PC{:}MEC(1{:}2)$ | SOC40%, 50°C, 120h |
| | Example 4 | $1.5M\text{-}LiPF_6 + 0.1M\text{-}LiBF_4 + 0.1M\text{-}LiBF_2(OCOOC(CF3)_2)/PC{:}MEC(1{:}2)$ | SOC40%, 50°C, 120h |
| | Example 5 | $1.5M\text{-}LiPF_6 + 0.2M\text{-}LiBF_4/PC{:}MEC(1{:}2)$ | SOC40%, 50°C 120h |
| | Example 6 | $1.5M\text{-}LiPF_6/PC{:}MEC(1{:}2)$ | SOC40%, 75°C, 240h |
| | Comparative Example 1 | $1.5M\text{-}LiPF_6/PC{:}MBC(1{:}2)$ | Not done |

**Table 2**

| | Cα (mAh/g) | cβ (mAh/g) | cα/cβ | ca (Ah/m$^2$) | Cc (Ah/m$^2$) | Cc/Ca | Ea (%) | Ec (%) | Capacity of Battery (Ah) | Amount of Co$_2$ (mL/g) |
|---|---|---|---|---|---|---|---|---|---|---|
| **Example 1** | 161 | 163 | 0.99 | 19.07 | 22.55 | 1.182 | 96 | 88 | 4.71 | 0.8 |
| **Example 2** | 159 | 163 | 0.98 | 19.07 | 22.55 | 1.182 | 96 | 88 | 4.65 | 0.8 |
| **Example 3** | 160 | 163 | 0.98 | 19.07 | 22.55 | 1.182 | 96 | 88 | 4.68 | 0.8 |
| **Example 4** | 159.5 | 163 | 0.98 | 19.07 | 22.55 | 1.182 | 96 | 88 | 4.67 | 0.8 |
| **Example 5** | 157 | 163 | 0.96 | 19.07 | 22.55 | 1.182 | 96 | 88 | 4.59 | 0.02 |
| **Example 6** | 155 | 163 | 0.95 | 19.07 | 22.55 | 1.182 | 96 | 88 | 4.53 | 0.8 |
| **Comparative Example 1** | 143 | 163 | 0.88 | 19.07 | 22.55 | 1.182 | 96 | 88 | 4.18 | 0.8 |

As is evident from Tables 1 and 2, the batteries of Examples 1 to 6 which satisfy the formula (1) (0.92Cβ < Cα ≤ 1.00Cβ) have a higher battery capacity and a higher energy density as compared with the battery of Comparative Example 1.

The nonaqueous electrolyte battery of at least one embodiment and example described above includes a positive electrode containing a lithium nickel cobalt manganese composite oxide, and a negative electrode containing a spinel-type lithium titanium composite oxide, and satisfies the formula (1) (0.92Cβ < Cα ≤ 1.00Cβ), so that it can have an improved battery capacity and an improved energy density.

The discharge capacities of the negative and positive electrodes referred to herein means the discharge capacities [mAh/g] based on a weight of each of the negative and positive electrode active materials, respectively.

The weight of the negative electrode active material in the negative electrode can be determined by the following procedure.

The negative electrode material layer is scraped off using a spatula or the like. The scraped sample is subjected to thermogravimetric analysis TG. In the thermogravimetric analysis TG, the sample is heated to 1000°C. The weight of the residue remains after heating at 1000°C is recorded as the weight of the active material.

The weight of the positive electrode active material in the positive electrode can be determined in the same manner as in the determination method for the negative electrode active material.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A nonaqueous electrolyte battery (21) comprising:

   a positive electrode (6) comprising $Li_{1-x}Ni_{1-a-bc}Co_aMn_bM1_cO_2$ (wherein M1 is at least one metal selected from the group consisting of Mg, Al, Si, Ti, Zn, Zr, Ca, W, Nb, and Sn, $-0.2 \leq x \leq 0.5$, $0 < a \leq 0.5$, $0 < b \leq 0.5$, and $0 \leq c \leq 0.1$);
   a negative electrode (7) comprising $Li_{4+y}Ti_{5-d}M2_dO_{12}$ (wherein M2 is at least one metal selected from the group consisting of Mg, Al, Si, Ti, Zn, Zr, Ca, W, Nb, and Sn, $-1 \leq y \leq 3.5$, and $0 \leq d \leq 0.1$); and
   a nonaqueous electrolyte,
   wherein a following formula (1) is satisfied:

$$0.92C\beta < C\alpha \leq 1.00C\beta \qquad (1)$$

   wherein the Cα is a discharge capacity (mAh/g) of the negative electrode (7), the Cα being obtained by discharging the nonaqueous electrolyte battery (21) from a fully charged state to 1.0 V of a voltage of the nonaqueous electrolyte battery (21) at 25°C and at a 1/5 C rate of a rated capacity;
   the Cβ is a discharge capacity (mAh/g) of the negative electrode (7), the Cβ is obtained by charging the negative electrode (7) to 1.4 V (vs. Li/Li⁺) with a constant current at the 1/5 C rate and at 25°C, and subsequently charging the negative electrode (7) at a constant potential for 10 hours, and then discharging the negative electrode (7) to 2.0 V (vs. Li/Li⁺) with a constant current at the 1/5 C rate.

2. The nonaqueous electrolyte battery (21) according to claim 1, wherein the Cα is within a range from 155 mAh/g to 175 mAh/g.

3. The nonaqueous electrolyte battery (21) according to claim 1, wherein a following formula (2) is satisfied:

$$0.95Ca \leq Cc \leq 1.2Ca \qquad (2)$$

   wherein the Cc is a discharge capacity (Ah/m²) of the positive electrode (6) per unit area, and
   the Ca is a discharge capacity (Ah/m²) of the negative electrode (7) per unit area.

4. The nonaqueous electrolyte battery (21) according to claim 1, wherein a following formula (3) is satisfied:

$$Ec \leq Ea \quad (3)$$

wherein the Ec is an initial charge-and-discharge efficiency (%) of the positive electrode (6), and
the Ea is an initial charge-and-discharge efficiency (%) of the negative electrode (7).

5. The nonaqueous electrolyte battery (21) according to claim 1, wherein the nonaqueous electrolyte comprises a B-containing lithium salt.

6. The nonaqueous electrolyte battery (21) according to claim 1, wherein an amount of $CO_2$ contained in the negative electrode (7) is within a range from 0.05 to 1.5 mL/g as measured by pyrolysis gas chromatography mass spectrometry (GC-MS) at 500°C.

7. The nonaqueous electrolyte battery (21) according to claim 1, which is in a state where the nonaqueous electrolyte battery (21) in a state of charge (SOC) of 5 to 50% has been stored at 45 to 85°C.

8. A battery pack comprising the nonaqueous electrolyte battery (21) according to claim 1.

C $\alpha$ =charge and discharge capacity in nonaqueous electrolyte battery (0.88C $\gamma$ )

C $\gamma$ =Amount of Li which can be absorbed in the negative electrode

C $\alpha$ (=0.907C $\beta$ )=Amount of Li which can be absorbed in the positive electrode

# F I G. 1

Charge and discharge capacity in three-pole cell (0.97C $\gamma$ )

C $\gamma$ =Amount of Li which can be absorbed in the negative electrode

C $\beta$ (=0.97C $\gamma$ )= Amount of Li which can be released from the negative electrode

# F I G. 2

Charge and discharge capacity (0.88C $\gamma$ +C $\delta$ ) in nonaqueous electrolyte battery whose charge and discharge balance is adjusted by self-discharge from the negative electrode

C $\gamma$ =Amount of Li which can be absorbed in the negative electrode

C $\alpha$ =(0.88C $\gamma$ )=Amount of Li which can be absorbed in the positive electrode    C $\delta$

C $\beta$ =(0.97C $\gamma$ )=Amount of Li which can be released from the negative electrode

# F I G. 3

FIG. 4

F I G. 5

F I G. 6

F I G. 7

Europäisches
Patentamt

European
Patent Office

Office européen
des brevets

## EUROPEAN SEARCH REPORT

Application Number

EP 14 15 7841

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/072080 A1 (INAGAKI HIROKI [JP] ET AL) 29 March 2007 (2007-03-29) <br> * examples 1-20,24-25 * <br> ----- | 1-5,7,8 | INV. <br> H01M4/131 <br> H01M4/485 <br> H01M4/505 |
| X | US 2007/009797 A1 (TAKAMI NORIO [JP] ET AL) 11 January 2007 (2007-01-11) <br> * paragraph [0106] - paragraph [0109] * <br> ----- | 1-5,7,8 | H01M4/525 <br> H01M10/04 <br> H01M10/0525 <br> H01M10/0568 |
| X | US 2007/009798 A1 (INAGAKI HIROKI [JP] ET AL) 11 January 2007 (2007-01-11) <br> * paragraphs [0158], [0160], [0181] * <br> ----- | 1-5,7,8 | H01M10/44 |
| X | WO 2013/031253 A1 (TOSHIBA KK [JP]; MATSUNO SHINSUKE [JP]; SARUWATARI HIDESATO [JP]; YAMA) 7 March 2013 (2013-03-07) <br> * abstract; claim 1; example 1 * <br> ----- | 1-4,6-8 | |

TECHNICAL FIELDS
SEARCHED (IPC)

H01M

The present search report has been drawn up for all claims

| Place of search | Date of completion of the search | Examiner |
|---|---|---|
| Munich | 22 May 2014 | Steinreiber, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

2

## ANNEX TO THE EUROPEAN SEARCH REPORT
## ON EUROPEAN PATENT APPLICATION NO.

EP 14 15 7841

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2014

| Patent document cited in search report | | Publication date | Patent family member(s) | | Publication date |
|---|---|---|---|---|---|
| US 2007072080 | A1 | 29-03-2007 | CN 1941459 A | | 04-04-2007 |
| | | | JP 4625744 B2 | | 02-02-2011 |
| | | | JP 2007095496 A | | 12-04-2007 |
| | | | KR 20070036707 A | | 03-04-2007 |
| | | | US 2007072080 A1 | | 29-03-2007 |
| US 2007009797 | A1 | 11-01-2007 | JP 4213687 B2 | | 21-01-2009 |
| | | | JP 2007018863 A | | 25-01-2007 |
| | | | US 2007009797 A1 | | 11-01-2007 |
| US 2007009798 | A1 | 11-01-2007 | CN 1893166 A | | 10-01-2007 |
| | | | JP 2007018883 A | | 25-01-2007 |
| | | | KR 20070006581 A | | 11-01-2007 |
| | | | US 2007009798 A1 | | 11-01-2007 |
| | | | US 2012009460 A1 | | 12-01-2012 |
| | | | US 2013029228 A1 | | 31-01-2013 |
| WO 2013031253 | A1 | 07-03-2013 | CN 103620853 A | | 05-03-2014 |
| | | | JP 2013045759 A | | 04-03-2013 |
| | | | WO 2013031253 A1 | | 07-03-2013 |

For more details about this annex : see Official Journal of the European Patent Office, No. 12/82